Europäisches Patentamt

(19) European Patent Office

Office européen des brevets

(11) Publication number: **0 031 857**
A1

## (12) EUROPEAN PATENT APPLICATION

(21) Application number: **79200815.3**

(22) Date of filing: **28.12.79**

(51) Int. Cl.³: **C 08 K 5/00**
C 08 J 3/22, C 08 K 9/12

(43) Date of publication of application:
**15.07.81 Bulletin 81/28**

(84) Designated Contracting States:
**AT BE CH DE FR GB IT SE**

(71) Applicant: **WAVIN B.V.**
**251 Händellaan**
**NL-8031 EM Zwolle(NL)**

(72) Inventor: **Stoffelsma, Uilke**
**Elzenlaan 11**
**NL-7771 DJ Hardenberg(NL)**

(74) Representative: **Van der Veken, Johannes**
**Adriaan et al,**
**Willem Witsenplein 3 & 4**
**NL-2509 LP The Hague(NL)**

(54) A stabilised colouring composition for thermoplastics, a method of manufacturing plastics and plastics mixed with the colouring composition.

(57) Colouring composition comprising a dye stuff and an additive preventing degradation of plastics. The dry stuff comprises 15 to 35% by weight of additives.

-1-

A colouring composition for plastics

The invention relates to a method of manufacturing a plastics product by an extrusion or injection moulding process, starting from a plasticscompound comprising a thermoplastics material, a dyestuff and at least one additive preventing a degradation of plastics.

An additive preventing degradation of plasticsmaterial is understood to be an additive which prevents a decrease in mechanical strength of a plasticsobject, particularly if same is exposed to the open air and sunlight, for instance, a UV-stabilizer, anti-oxidizing agents or such.

Such a method is known in the art. It is customary in said known method of manufacturing a plasticsproduct such as, for instance, sections by extrusion or crates by injection-moulding, to start with a granulate in which the additives preventing a degradation of plasticsmaterial have already been admixed. The additives may consist of UV-stabilizers, anti-oxidizing agents or such. Said initial granulate is then dyed with dyestuff in known dispensing and mixing apparatus and subsequently processed by extrusion or an injection-moulding process.

A method of this type offers the disadvantage that it is bounded to specific amounts and kinds of additives, such as occur in granulates. Apart from the fact that these granulates are more expensive than so-called unmixed granulates, said disadvantage is particularly clear if, for specific applications, special additives preventing degradation of plastics would be selected at choice. In the latter case either very large quantities of granulates would have to be purchased or a higher cost price should be paid, causing the price of the product to be too expensive.

It is the object of the invention to provide a method which does not offer these disadvantages and according to which there is no need to start from a plastics material or plastics compound to which very specific amounts of additives resisting decomposition of plastics material have been admixed.
This aim is attained in that a plastics material or plastics composition is mixed with a preformed mixture of dye stuff and at least one additive preventing a degradation of plastics.

This method is a most surprising fact because an expert in the art would assume the flow of dyestuff to be strongly affected by the presence of said additives, so that mixing the latter with the granulate would leave much to be desired and colour differences in the finished products could be expected. This is, however, not the case.

Another notable advantage of the present method is that very small amounts of said additives can be received in the plastics or plastics compound. So far, this was only possible when mixing additives with natural granulate, with amounts of 0,01 to 0,5% by weight, which requires a very expensive equipment for dispensing and mixing. Moreover, separate dispensers and mixers for colouring where reauired which, in normal circumstances dispense only accurately at 0,5% by weight of additives and more.

So, when the method according to the invention is carried out, extremely small amounts of additives need be added. Only one simple apparatus for dispensing and mixing is then used, which apparatus simultaneously supplies a mixture of dyestuff and additive preventing a degradation of plastics. An apparatus which dispenses only accurately at 0,5% by weight and more, need therefore not be used.

It is observed that a preformed mixture of dyestuff and one or more of said additives cannot be separated and may be added as a component. Additives preventing a degradation of plastics, mostly in the form of anti-oxidizing agents and UV-absorbing agents, adhere more or less to the duestuff.

A mixing with a plastics compound is preferably carried out at room temperature, whereafter an object is produced by injection-moulding or extrusion.

The dyestuff preferably comprises 15 to 35% by weight of additives. An amount of the mixture is added to the compound, such that same comprises 0,5 to 1% by weight of dyestuff.

Both organic and inorganic dyestuffs can be used, such as anthrachinone, phtalocyanic and indantrhen dyestuffs as organic dyestuffs as well as cadmium yellow, cadmium selenium sulfite, nickel titanium pigments, chromium oxides, cobalt pigments, ultramarine, iron oxide, titanium oxide and carbon black.

Suitable additives preventing a degradation of plastics are anti-oxidizing agents, UV-stabilizers, and the like, which can be applied both individually and jointly.

Examples of anti-oxidizing agents are cresols, phenols, organic phosphites and propionates; benzophenones and benzotriazoles are examples of UV-stabilizers.

The method according to the invention can advantageously be carried out in order to form products of polyolefins obtained from recycled polyolefins from polyolefin products, for instance, polyolefin products such as polyethylene crates. After an average lifespan of seven years, the mechanical properties of said crates become insufficient. New crates injection-moulded from scrap material of old ones (having an age of over seven years) will meet all desired requirements, but will have a considerably shorter lifespan. This in comparison with the lifespan of crates obtained from natural granulate. The mechanical properties of said "new/old" crates leave very much to be desired after a short lapse of time.

The use of a preformed mixture of dyestuff and one or more additives, has proved to be effective for application of recycled polyolefins from old plastic crates. The plastics products formed will have all of the properties of crates made of a natural granulate.

The invention in another aspect relates to a method of preparing a plastics composition · · while applying thermoplastics plastics, a dyestuff and at least one additive preventing degradation of plastics wherein plastics or a plastics composition are or is mixed with a preformed mixture of dyestuff and at least one additive preventing a degradation of plastics.

The invention also relates to a method of preparing a colouring compound for plasticizing plastics wherein a dyestuff is mixed with at least one additive preventing a degradation of plastics.

The invention will now be explained by means of some examples.

EXAMPLE I

600 g of cobalt pigment are mixed with 120,3 g of 2,2[1]-methylene bis (4-ethyl-6.tert,butylphenol) as an anti-oxidizing agent, at room temperature in a known dyestuff mixer. After one hour of mixing the anti-oxidizing agent is mixed completely with the initial dyestuff; this can be perceived visually. The flowing properties of the basic dye-stuff with 16,7% by weight of additive have hardly changed.

In a dispensing mixer 500 g of this dyestuff-additive-compound is mixed with 49,5 kg of natural polyethylene granulate (melting index = 6,5 g/10 minutes, specific weight 0,963 g/ml), whereafter crates are being injection-moulded; the tensile strength measured on normalized bars , obtained from crates has proved to amount 197 $kg/cm^2$ with a standard deviation of 44 $kg/cm^2$. When crates are injection-moulded from natural polyethylene granulate,

-6-

a tensile strength of 212 kg/cm$^2$ with a standard deviation of 50 kg/cm$^2$ is produced. A comparison between the said two standard deviations shows that dispersion of pigment treated in the polyethylene does not cause a dispersion of tensile strength in the walls of the crate to be effected.

EXAMPLE II

In a dye-stuff mixer 1.560 g of chromiumtrioxide dyestuff is mixed with 840 g of 2-hydroxy-4-n-octoxybenzophenon. (= UV-stabilizer for polyolefins) producing after two hours a pigment compound complying with requirements concerning flow velocity and colour. 2.310 g of this dyestuff is subsequently mixed with 47,7 kg of natural polyethylene granulate (melting index 7,5 g/10 minutes; specific weight = 0,965 g/ml.) in a COLORTRONIC dispensing and mixing apparatus connected to an injection-moulding machine. Test bars of crates obtained by injection-moulding show a tensile strength of 204 kg/cm$^2$ with a standard deviation of 45 kg/cm$^2$; those of crates of the same natural granulate have a tensile strength of 231 kg/cm$^2$ with a standard deviation of 52 kg/cm$^2$ (in each of the tests the number of test bars amounted to 10).

EXAMPLE III

Cadmium yellow pigment (CdS) was mixed with the following additives preventing degradation of plastics, in the manner of examples I and II:
25% by weight of 2,2$^1$-methylene bis (4-ethyl-6-tert.butylphenol) = anti-oxidizing agent a;
25% by weight of cyclic neopentanetetrayl bis (octadecyl phosphite) (distearyl pentacryl thritodiphosphite) = anti-oxidizing agent b; 25% by weight of 2-hydroxy-4-n-octoxybenzo- phenon (= UV-stabilizer c) and

12,5% by weight of anti-oxidizing agent b with 12% by weight of UV-stabilizer c.

Said pigment compositions were mixed with polyethylene recycled from crates in the manner of example II and crates were formed thereof by injection-moulding. From the same recycled material (melting index 6,5 g/10 minutes, specific weight 0,964 g/ml) to which only 0,6% by weight of cadmium yellow pigment as yellow pigment was added (= blank of Ref. 2).

16 test bars were cut from crates of each batch in order to test the tensile strength; from blank Ref. 2 crates respectively 32 test bars were taken. Each time 16 test bars were subsequently exposed to 800 hours of artificial sunlight, such as is obtained in a known Xenon test apparatus (= 1600 hours of actual testing).

The results of the tensile strength test with both exposed and unexposed test bars will be shown in the following table I:

Table I: Tensile strength in $kg/cm^2$ of test bars from crates obtained by injection-moulding recycled material, without (Ref. 2) and with (code 2 to 6) artificial ageing.

o)$\overline{X}$ = average value of 16 test bars
(S) = standard deviation

| Code | Ref. 2 | 2 | 3 | 4 | 6 | 5 |
|---|---|---|---|---|---|---|
| Pigment | ←——— 0,6% by weight of cadmium yellow ——→ | | | | | |
| Antioxiding agent | - | - | 0,2 % b.w. | 0,2 % b.w. | - | 0,1% b.w. |
| UV-stabilizer | - | - | - | - | 0,2% b.w. | 0,1% b.w. |
| Tensile strength o)X S | 130 (35) | 39 (31) | 122 (65) | 61 (41) | 70 (56) | 136 (68) |

- 8 -

It appears that an admixture of a dyestuff additives com-
position to recycled material does not have significant
properties; the standard deviations have significant limits.
The final results also show how an injection-moulded process
may comply very simply with specific production requirements.


EXAMPLE IV

Example I is repeated with polyvinylchloride and similar
results are obtained when forming sections by injection-
moulding.

-1-

CLAIMS

1    A colouring composition for thermoplastics comprising a dyestuff mixed with at least one additive preventing a degradation of plastics.

2.    A composition according to claim 1, in which the composition comprises 0,5 to 50% by weight and preferably 15 to 35 % by weight of such additives.

3.    A composition as claimed in claim 1 or 2, in which said additive comprises at least one UV-stabilizer and/or an anti-oxidizing agent.

4.    A composition as claimed in claims 1 to 3, in which the dyestuff is an inorganic pigment and/or organic dyestuff, preferably cadmium yellow pigment, cobalt pigment or chromiumtrioxide pigment.

5.    A method of manufacturing a plastics product by an extrusion or injectionmoulding process starting from a plastics composition comprising a thermoplastic material, a dyestuff and at least one additive preventing a degradation of plastics, such as a UV-stabilizer, an anti-oxidizing agent, or the like, in which plastics or plastics compositions are or is mixed with a preformed mixture of dyestuff and at least one additive preventing a degradation of plastics according to claim 1.

6.    A method as claimed in claim 5, in which the plastics is a polyolefin.

7.    A method as claimed in claims 5 and 6, in which the plastics compound at least partially comprises recycled plastics products, in particular polyolefin products obtained from recycled polyolefins.

8. A method as claimed in claims 5 to 7, in which 0,5 to 1,5% by weight of dyestuff from the preformed mixture is incorporated in the plastic compound.

9. A shaped article obtained by carrying on the method as claimed in claims 5 to 8.

10. A plastics composition by using a thermoplastics material and at least one additive preventing degradation of plastics, comprising a plastics or plasticscompound mixed with a preformed mixture of dyestuff and at least one additive preventing a degradation of plastics according to claim 1.

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| X | US – A – 4 040 997 (N.C. VAN VONNO)<br>* Claims 1,4,8; column 2, lines 63–68; column 3, lines 1–14; column 3, lines 59–61 * | 1–10 |
|  | FR – M – 2 040 134 (SONESSON)<br>* Claim 1 * | 1 |
|  | US – A – 3 827 678 (C.L. ANDREWS)<br>* Claim 1; column 3, lines 57–63 * | 1 |
| E | EP – A – 007 541 (DALKIN)<br>* Claims 1–8; page 13, lines 26–29 * | 1 |
| P | NL – A – 78 11090 (HAAGEN)<br>* Claim 1 * | 1 |
| A | CH – A – 390 436 (EBSA)<br>* Claim 1 * | 1 |
| A | GB – A – 1 364 675 (ICI)<br>* Claims 1–7 * | 1 |

./..

The present search report has been drawn up for all claims

| Place of search | Date of completion of the search | Examiner |
|---|---|---|
| HAGUE | 01.09.1980 | DEPIJPER |

EPO Form 1503.1 06.78

### CLASSIFICATION OF THE APPLICATION (Int. Cl. 3)

C 08 K 5/00
C 08 J 3/22
C 08 K 9/12

### TECHNICAL FIELDS SEARCHED (Int.Cl. 3)

C 08 K 5/00
C 08 K 9/12
C 08 L 3/22

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

**0031857**

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| L | <u>NL – A – 78 10978</u> (WAVIN) <br> * Claims 1–9 * | 1,6 | |
| L | <u>NL – A – 78 10979</u> (WAVIN) <br> * Claims 1–19 * | 1–10 | |
| | | | TECHNICAL FIELDS SEARCHED (Int. Cl. 3) |

EPO Form 1503.2  06.78